# EUROPEAN PATENT SPECIFICATION

(11) **EP 0 593 278 B1**
(45) Date of publication and mention of the grant of the patent: **06.08.1997**
(21) Application number: 93308156.4
(22) Date of filing: 13.10.1993
(51) Int. Cl.: B01D 39/20, C04B 41/85

(54) **Filter for metal hot melt and process for production thereof**
Filter für Metallschmelzen und Verfahren zu seiner Herstellung
Filtre pour métal fondu et son procédé de fabrication

(30) Priority: 13.10.1992 JP 300416/92
(43) Date of publication of application: 20.04.1994
(73) Proprietor: NGK INSULATORS, LTD., Nagoya City Aichi Pref. (JP); NGK ADREC CO., LTD., Nagoya City, Aichi Pref. (JP)
(72) Inventor: Shirakawa, Hiroshi, Kakamigahara-city, Gifu-pref. (JP); Yamakawa, Osamu, Kani-city, Gifu-prefecture 509-02 (JP); Watanabe, Hiroshi, Tajimi-city, Gifu-prefecture 507 (JP)
(74) Representative: Paget, Hugh Charles Edward

(56) References cited:
- EP-A- 0 087 789
- EP-A- 0 322 932
- EP-A- 0 410 601
- US-A- 4 264 346
- US-A- 5 114 882
- PATENT ABSTRACTS OF JAPAN vol. 15, no. 357 (C-866)10 September 1991 & JP-A-03 141 181 (SAGA PREF. GOV.) 17 June 1991

## Description

### Background of the Invention and Related Art Statement

The present invention relates to a filter for metal hot melt, used for filtering off the solid impurities contained in a metal hot melt (e.g. aluminum hot melt), a method for treating a metal hot melt using said filter, and a process for producing said filter.

A metal sheet or foil, for example, an aluminum sheet or foil is produced by casting an aluminum hot melt into an ingot and rolling the ingot. If the ingot is contaminated by solid impurities such as minute fragments of metal oxides or refractories contained in the aluminum hot melt, pinholes or surface defects may appear in the sheet or foil produced by the rolling of the ingot. The prevention of such pinholes or surface defects requires the removal of the solid impurities contained in the hot melt. For this purpose, various filters for metal hot melt have heretofore been developed. Of these filters, a ceramic foam filter is known as a simple and inexpensive filter.

The ceramic foam filter has a three-dimensional network structure of high porosity containing numerous continuous pores and have various excellent properties such as (1) filterability with low pressure loss, (2) small apparent density, (3) lightweightness and (4) large surface area and consequently contact reaction of high efficiency.

The above-mentioned conventional ceramic foam filter has a porosity as high as 70-90% and therefore is inferior to rigid media filters (tubular filters) in the removability of solid impurities contained in metal hot melt. When the ceramic foam filter is used, for example, for aluminum hot melt, there is mainly used a filter made of a mixture of alumina (Al₂O₃) and cordierite (2MgO·2Al₂O₃·5SiO₂); since the cordierite contains 51% be weight of SiO₂, the SiO₂ reacts with the aluminum hot melt, causing reduction of SiO₂ and contamination of hot melt. Reaction of the SiO₂ further brings about a shorter filter life.

EP-A-410601 describes a composite ceramic material useful for example as a filter for molten metal having an alumina matrix containing alumina fibres and also containing mullite particles formed from colloidal silica and the alumina fibres. These mullite formations are on the surface of the alumina fibres in the alumina matrix and are said to bond the fibres to the matrix.

EP-A-87789 describes a porous ceramic article, also useful for example as a molten metal filter, which has a three-dimensional network of strands and metal nitrides, carbides, borides or silicides dispersed in or deposited on the strands. The strands are for example alumina/silica carbide or alumina/silica. Particularly in order to increase strength at high temperature, needle-like crystals, e.g. of mullite, are formed in the porous body during its sintering, so as to be dispersed in the strands.

The object of the present invention is to provide a filter for metal hot melt, which is free from the above-mentioned problems of the prior art, a method for treating a metal hot melt using said filter, and a process for producing said filter.

Further objects of the present invention are to provide a filter for metal hot melt, which has higher filtering ability and longer life than the conventional ceramic foam filter, a process for producing said filter, and a method for treating a metal hot melt using said filter.

### Summary of the Invention

According to the present invention there is provided a filter for metal hot melt, as set out in claim 1.

According to the present invention there is further provided a method for treating a metal hot melt, as set out in claim 7

According to the present invention there is furthermore provided a process for producing a filter for metal hot melt, as set out in claim 8.

In the present invention, the network surface of a porous ceramic material is covered with needle-like crystals. As a result, even when the porous ceramic material is made of alumina-cordierite, the SiO₂ of the cordierite in the porous ceramic material makes no contact with aluminum hot melt and thereby the contamination of aluminum hot melt can be minimized.

### Brief Description of the Drawings

Fig. 1 is a photograph (150̸ magnification) by SEM showing the crystal structure of an alumina-cordierite ceramic foam used in Run No. 2 of Example 1 as a base material for filter.

Fig. 2 is a photograph (50̸0̸ magnification) by SEM showing the crystal structure of the same alumina-cordierite ceramic foam as above.

Fig. 3 is a photograph (150̸ magnification) by SEM showing the crystal structure of the network surface of a filter produced in Run No. 2 of Example 1 by depositing crystals on an alumina-cordierite ceramic foam.

Fig. 4 is a photograph (50̸0̸ magnification) by SEM showing the crystal structure of the network surface of the same filter as above.

Fig. 5 is an X-ray diffraction pattern for an alumina ceramic foam used in Run No. 9 of Example 1.

Fig. 6 is an X-ray diffraction pattern for a filter produced in Run No. 9 of Example 1.

### Detailed Description of the Invention

The present invention is described in detail below.

The needle-like crystals deposited on the network surface of the porous ceramic material have a composition such as 9Al₂O₃·2B₂O₃ or 3Al₂O₃·2SiO₂. In view of the reactivity of SiO₂ with aluminum hot melt, the composition is preferably 9Al₂O₃·2B₂O₃.

The porous ceramic material has a three-dimensional network structure and includes, for example, a ceramic foam filter and a ceramic honeycomb structure.

The porous ceramic material can be made of any substance as long as it is a ceramic. However, it is preferably a composition comprising at least one compound selected from alumina, mullite and cordierite.

The porous ceramic material has a porosity of preferably 70̸-90̸% and a cell number of 4-33. Herein, the cell number refers to a number of pores present between two points distant by 25 mm (one inch).

The needle-like crystals deposited on the surface of the porous ceramic material, each have a length of preferably 50̸ µm or less. When the length is too large, the crystals are detached when the filter is fitted into a filtration apparatus or when a metal hot melt is passed through the filter, whereby the metal hot melt is contaminated.

The filter preferably has a specific surface area at least 50̸ times as large as that of the porous ceramic material alone. This is preferable in view of the filtration efficiency, etc.

Description is made now on the preferred process for producing the present filter for metal hot melt.

A porous ceramic material having a three-dimensional network structure is prepared. Then, it is immersed in a slurry having a given composition, pulled up, dried and fired, whereby a filter for metal hot melt is produced which comprises a porous ceramic material and needle-like crystals deposited on the network surface of the porous ceramic material.

The slurry in which the porous ceramic material is to be immersed, has a given composition. That is, a ceramic slurry is prepared by adding water and an organic binder to a material composed of 15-80̸% by weight of B₂O₃, 2-60̸% by weight of Al₂O₃, 0̸-30̸% by weight of CaO, 5-50̸% by weight of MgO and 0̸-30̸% by weight of SiO₂. The above material to which water and an organic binder are to be added, may be a simple mixture of individual components but is preferably a vitrified material because the vitrified material is melted uniformly on the porous ceramic material during firing and thereby crystallization is accelerated. Since the slurry contains 15-80̸% by weight of B₂O₃ and 2-60̸% by weight of Al₂O₃, the temperature of firing and crystallization can be kept at 1,40̸0̸°C or below. B₂O₃ is preferably contained in an amount of 15% by weight or more because B₂O₃ improves the corrosion resistance to metal hot melt (e.g. aluminum hot melt). However, the presence of B₂O₃ in an amount larger than 80̸% by weight is not preferable because the slurry gives rise to viscosity drop during firing and crystallization. CaO and MgO are required for the main purpose of keeping the melting point and viscosity of the crystallization material at appropriate levels.

The slurry contains SiO₂ in an amount of 0̸-30̸% by weight. The presence of SiO₂ allows the resulting filter to have higher wettability with metal hot melt (e.g. aluminum hot melt) and higher filterability for metal hot melt. The presence of SiO₂ in an amount larger than 30̸% by weight is not preferable because free silicon may dissolve in the metal hot melt.

The porous ceramic material having a three-dimensional network structure is immersed in the above-mentioned slurry, then pulled up and dried, and fired at a temperature of 1,0̸0̸0̸°C or higher. The firing temperature is preferably 1,0̸0̸0̸-1,40̸0̸°C. A firing temperature lower than 1,0̸0̸0̸°C brings about incomplete crystallization, and a firing temperature higher than 1,40̸0̸°C makes large the vaporization amount of B₂O₃.

During the firing, the cooling rate is preferably 30̸-70̸°C/hr. When the cooling rate is larger than 70̸°C/hr, no sufficient crystallization of 9Al₂O₃·2B₂O₃, 3Al₂O₃·2SiO₂ or the like may occur; when the cooling rate is smaller than 30̸°C/hr, a long time is required for cooling, which may become a productivity problem.

The porous ceramic material, which is a base material for the filter of the present invention, is produced, for example, as follows.

A soft polyurethane foam is immersed in a slurry composed mainly of silica, alumina, magnesia, etc. all finely ground; the excessive slurry adhering to the polyurethane foam lattice is removed by air spraying or the like, followed by drying; thereafter, sintering is conducted to obtain a cordierite-based porous ceramic material.

The present invention is described in more detail below by way of Examples. However, the present invention is in no way restricted to these Examples.

### Example 1 and Comparative Example

As base materials for filter, i.e. porous ceramic materials, there were used #13 Ceramic Foam (alumina-cordierite) and # 13 Ceramic Foam (alumina) (products of BRIDGESTONE TIRE CO., LTD.) each having 11-15 cells between the linear distance of 25 mm (1 inch). Various slurries were prepared by adding 50̸% by weight of water and 5% by weight of CMC (an organic binder) to a material for crystallization having a composition shown in Table 1 or 2. Then, one of the porous ceramic materials was immersed in one of the slurries for 30̸ minutes at normal temperature at normal pressure, and pulled up. The excessive slurry was removed, followed by drying at 70̸°C. Then, firing was conducted at a temperature shown in Table 1 or 2 for 5 hours (10̸ hours for Run No. 17), followed by cooling at a cooling rate shown in Table 1 or 2 to obtain filters for metal hot melt of Run Nos. 1-19, each comprising a porous ceramic material and needle-like crystals deposited on the network surface of the porous ceramic material.

Each filter was observed for conditions of crystals of 9Al₂O₃·2B₂O₃ [crystal length and increase (times) of specific surface area] using a scanning electron microscope (SEM) and a measuring device of specific surface area. The results are shown in Tables 1 and 2.

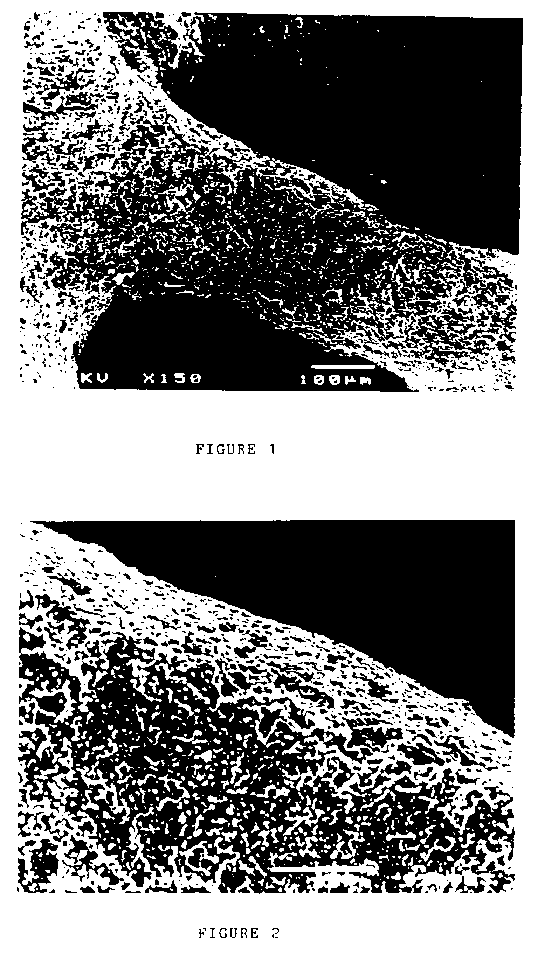

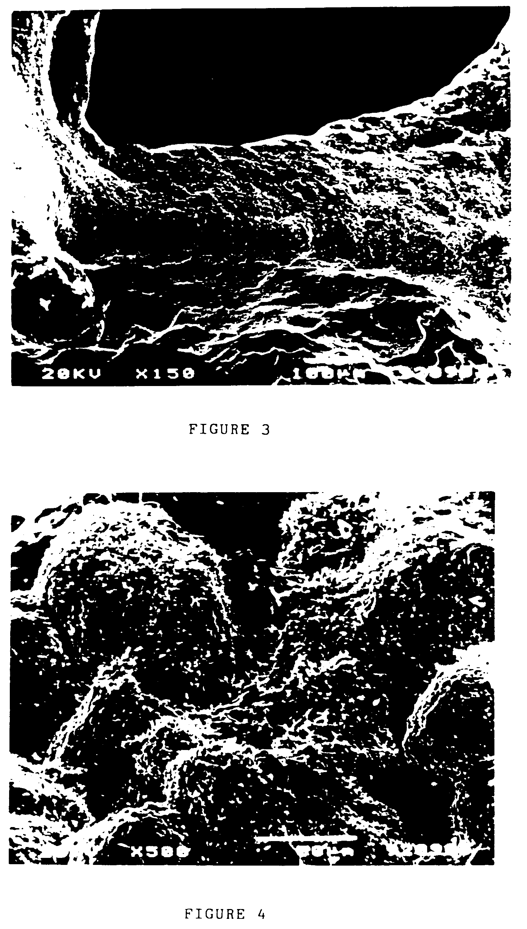

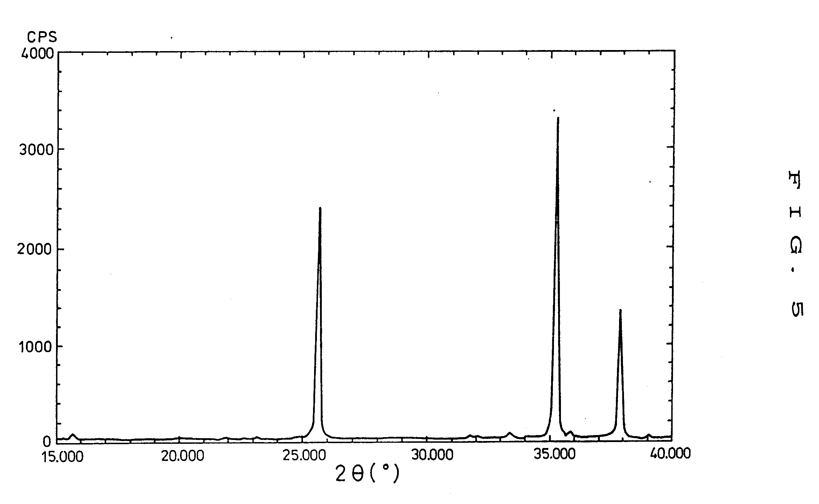

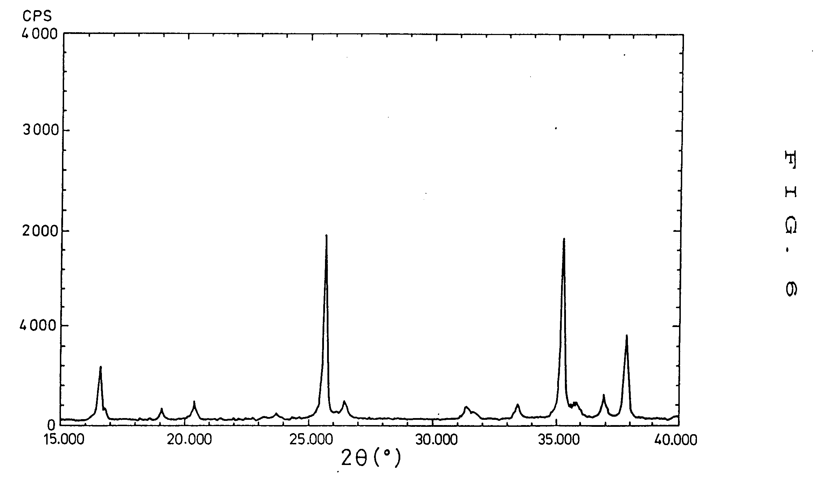

Incidentally, Fig. 1 and Fig. 2 are each a photograph (150̸ magnification in Fig. 1 and 50̸0̸ magnification in Fig. 2) by SEM showing the crystal structure of the ceramic foam used in Run No. 2. Fig. 3 and Fig. 4 are each a photograph (150̸ magnification in Fig. 3 and 50̸0̸ magnification in Fig. 4) by SEM showing the crystal structure of the network surface of the filter obtained in Run No. 2. Fig. 5 is an X-ray diffraction pattern for the ceramic foam used in Run No. 9. Fig. 6 is an X-ray diffraction pattern for the filter obtained in Run No. 9. In the X-ray diffraction patterns of Fig. 5 and Fig. 6, the peaks of 9Al₂O₃·2B₂O₃ are at 2θ = 16.5°, 20̸.4°, 26.3°, 31.3°, 33.2° and 35.8° and other peaks are for α-alumina.

Each of the above-obtained filters was subjected to filtration of an aluminum hot melt specified by JIS 10̸50̸ (10̸ kg of the hot melt was passed per 1 cm² of the cross-sectional area of the filter) to examine the reactivity of the filter with the aluminum hot melt. As a result, dissolution of Ca was seen in the filter of Run No. 7 and dissolution of Si was seen in the filter of Run No. 8.

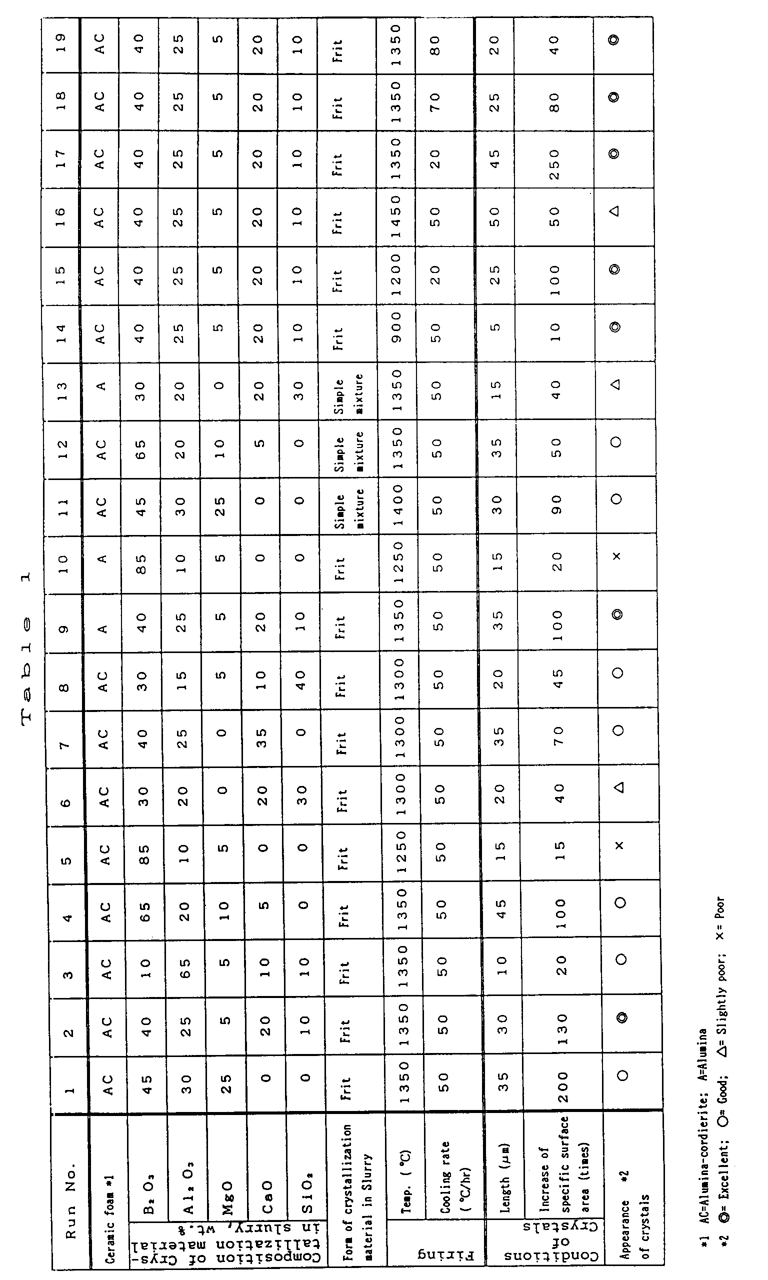

### Example 2

As a base material for filter, there was used #20̸ Ceramic Foam (alumina) (a product of BRIDGESTONE TIRE CO., LTD.) having 18-22 cells between the linear distance of 25 mm (1 inch). A slurry was prepared by mixing 50̸% by weight of New Zealand kaolin having an average particle diameter of 1 µm and 50̸% by weight of sintered alumina having an average particle diameter of 0̸.5 µm and adding thereto 60̸% by weight of water and 3% by weight of CMC (an organic binder). The above ceramic foam was immersed in the slurry under the same conditions as in Example 1, pulled up and dried, fired at 1,650̸°C for 5 hours and subjected to natural cooling to produce a filter for metal hot melt.

The filter was observed for conditions of crystals using a SEM, in the same manner as in Example 1. Deposition of needle-like crystals of mullite (3Al₂O₃·2SiO₂) on the network surface of the porous ceramic material was seen.

### Example 3

An aluminum hot melt specified by JIS 10̸50̸ was passed through each of the filters obtained in Run Nos. 2 and 4 of Example 1 and the ceramic foam itself used in production of said filters, in an amount of 10̸ kg per 1 cm² of said filter or said foam. Boron contents in aluminum hot melt before and after the passing were measured, and the removal (%) of boron was calculated from the boron change before and after the passing. As a result, the boron removal was 65% in the filter of Run No. 2 and 41% in the filter of Run No. 4, while that of the ceramic foam itself was 28%.

As is clear from the results of Examples and Comparative Example, the conditions of crystals and appearance of crystals on the porous ceramic material are good when the slurry, in which the porous ceramic material is immersed, has a composition of given range. Figs. 1-6 show a difference in crystal conditions of 9Al₂O₃·2B₂O₃.

As is also clear, the filter of the present invention shows excellent impurity removability for aluminum hot melt.

As described above, the present invention provides a filter for metal hot melt, comprising a porous ceramic material of three-dimensional network structure and needle-like crystals deposited on the network surface of the porous ceramic material, and a process for producing said filter. The filter, when used for filtration of, for example, aluminum hot melt, can minimize the contamination of the aluminum hot melt because the SiO₂ contained in the porous ceramic material made of alumina-cordierite or the like makes no contact with the aluminum hot melt, and has high filterability and a longer life than the porous ceramic material alone.

## Claims

1. A filter for metal hot melt, comprising a porous ceramic material of three-dimensional network structure having needle-like crystals composed of 9Al₂O₃·2B₂O₃ or 3Al₂O₃·2SiO₂ deposited on the surface of said network structure after sintering of the porous ceramic material.

2. A filter for metal hot melt according to Claim 1, wherein the porous ceramic material of three-dimensional network structure is a ceramic foam filter made of a composition containing at least one compound selected from alumina, mullite and cordierite.

3. A filter for metal hot melt according to Claim 1 or 2 wherein the porous ceramic material of three-dimensional network structure is a ceramic foam filter having a porosity of 70̸-90̸%.

4. A filter for metal hot melt according to any one of claims 1 to 3, wherein the porous ceramic material of three-dimensional network structure is a ceramic foam filter having a cell number of 4-33.

5. A filter for metal hot melt according to any one of claims 1 to 4, wherein the needle-like crystals each have a length of 50̸ µm or less.

6. A filter for metal hot melt according to any one of claims 1 to 5, which has a specific surface area at least 50̸ times as large as that of the porous ceramic material alone.

7. A method for treating a metal hot melt, which comprises passing a metal hot melt through a filter comprising a porous ceramic material of three-dimensional network structure having needle-like crystals composed of 9Al₂O₃·2B₂O₃ or 3Al₂O₃·2SiO₂ deposited on the surface of said network structure after sintering of the porous ceramic material, to remove the impurities contained in the metal hot melt.

8. A process for producing a filter for metal hot melt, which comprises immersing a sintered porous ceramic material of three-dimensional network structure in a slurry containing a material composed of 15-80̸% by weight of B₂O₃, 2-60̸% by weight of Al₂O₃, 0̸-30̸% by weight of CaO, 5-50̸% by weight of MgO and 0̸-30̸% by weight of SiO₂, then drying the porous ceramic material impregnated with the slurry, followed by firing to obtain a porous ceramic material having needle-like crystals deposited on the surface of said network structure.

9. A process according to Claim 8, wherein the firing for formation of needle-like crystals is conducted at a maximum temperature in the range of 1,000-1,400°C and the subsequent cooling is conducted at a rate of 30̸-70̸°C/hr.

10. A process according to Claim 8 or 9, wherein the slurry is a slurry of a vitrified frit.

## Patentansprüche

1. Filter für Metallheißschmelze, umfassend ein poröses Keramikmaterial mit dreidimensionaler Netzwerkstruktur, auf deren Oberfläche nach dem Sintern des porösen Keramikmaterials nadelartige Kristalle abgelagert sind, die aus 9Al₂O₃·2B₂O₃ oder 3Al₂O₃·2SiO₂ bestehen.

2. Filter für Metallheißschmelze nach Anspruch 1, worin das poröse Keramikmaterial mit dreidimensionaler Netzwerkstruktur ein Keramikschaumfilter aus einer Zusammensetzung ist, die zumindest eine aus Aluminiumoxid, Mullit und Cordierit ausgewählte Verbindung umfaßt.

3. Filter für Metallheißschmelze nach Anspruch 1 oder 2, worin das poröse Keramikmaterial mit dreidimensionaler Netzwerkstruktur ein Keramikschaumfilter mit einer Porosität von 70-90% ist.

4. Filter für Metallheißschmelze nach einem der Ansprüche 1 bis 3, worin das poröse Keramikmaterial mit dreidimensionaler Netzwerkstruktur ein Keramikschaumfilter mit einer Zellenzahl von 4-33 ist.

5. Filter für Metallheißschmelze nach einem der Ansprüche 1 bis 4, worin die nadelartigen Kristalle jeweils eine Länge von 50 µm oder weniger aufweisen.

6. Filter für Metallheißschmelze nach einem der Ansprüche 1 bis 5, der eine spezifische Oberfläche aufweist, die zumindest 50mal so groß wie jene des porösen Keramikmaterials allein ist.

7. Verfahren zur Behandlung einer Metallheißschmelze, das das Hindurchschicken einer Metallheißschmelze durch einen Filter umfaßt, der ein poröses Keramikmaterial mit dreidimensionaler Netzwerkstruktur mit nadelartigen Kristallen umfaßt, die aus 9Al₂O₃·2B₂O₃ oder 3Al₂O₃·2SiO₂ bestehen und die nach dem Sintern des porösen Keramikmaterials auf der Oberfläche der Netzwerkstruktur abgelagert sind, um die in der Metallheißschmelze enthaltenen Verunreinigungen zu entfernen.

8. Verfahren zur Herstellung eines Filters für Metallheißschmelze, welches das Eintauchen eines gesinterten porösen Keramikmaterials mit dreidimensionaler Netzwerkstruktur in eine Aufschlämmung umfaßt, die ein Material enthält, das aus 15-80 Gew.-% B₂O₃, 2-60 Gew.-% Al₂O₃, 0-30 Gew.-% CaO, 5-50 Gew.-% MgO und 0-30 Gew.-% SiO₂ besteht, sowie das anschließende Trocknen des mit der Aufschlämmung getränkten porösen Keramikmaterials, gefolgt vom Brennen, um ein poröses Keramikmaterial mit auf der Oberfläche der Netzwerkstruktur abgelagerten nadelartigen Kristallen zu erhalten.

9. Verfahren nach Anspruch 8, worin das Brennen zur Bildung der nadelartigen Kristalle bei einer Maximaltemperatur im Bereich von 1.000-1.400°C durchgeführt wird und das darauffolgende Abkühlen mit einer Rate von 30-70°C/h erfolgt.

10. Verfahren nach Anspruch 8 oder 9, worin die Aufschlämmung eine Aufschlämmung einer verglasten Fritte ist.

## Revendications

1. Filtre pour métal en fusion comprenant une matière céramique poreuse ayant une structure d'un réseau tridimensionnel ayant des cristaux en aiguille composés de 9Al₂O₃.2B₂O₃ ou 3Al₂O₃.2SiO₂ déposés à la surface de la structure dudit réseau après frittage de la matière céramique poreuse.

2. Filtre pour métal en fusion selon la revendication 1 où la matière céramique poreuse de la structure du réseau tridimensionnel est un filtre en mousse de céramique fait d'une composition contenant au moins un composé sélectionné parmi l'alumine, la mullite et la cordiérite.

3. Filtre pour métal en fusion selon la revendication 1 ou 2 où la matière céramique poreuse de la structure du réseau tridimensionnel est un filtre en mousse de céramique ayant une porosité de 70-90 %.

4. Filtre pour métal en fusion selon l'une quelconque des revendications 1 à 3 où la matière céramique poreuse de la structure du réseau tridimensionnel est un filtre en mousse de céramique ayant un nombre d'alvéoles de 4-33.

5. Filtre pour métal en fusion selon l'une quelconque des revendications 1 à 4 où les cristaux en aiguille ont une longueur de 50 µm ou moins.

6. Filtre pour métal en fusion selon l'une quelconque des revendications 1 à 5 qui a une aire superficielle spécifique qui est au moins 50 fois aussi importante que celle de la matière céramique poreuse seule.

7. Méthode de traitement d'un métal en fusion qui consiste à faire passer un métal en fusion à travers un filtre comprenant une matière céramique poreuse et une structure d'un réseau tridimensionnel ayant des cristaux en forme d'aiguille composés de 9Al₂O₃.2B₂O₃ ou 3Al₂O₃.2SiO₂ déposés à la surface de ladite structure en réseau après frittage de la matière céramique poreuse pour éliminer les impuretés contenues dans le métal en fusion.

8. Procédé de production d'un filtre pour métal en fusion qui consiste à immerger une matière céramique poreuse d'une structure d'un réseau tridimensionnel dans une bouillie contenant une matière composée de 15-80 % en poids de B₂O₃, 2-60 % en poids de Al₂O₃, 0-30 % en poids de CaO, 5-50 % en poids de MgO et 0-30 % en poids de SiO₂, puis à sécher la matière céramique poreuse imprégnée de la bouillie avec ensuite cuisson pour obtenir une matière céramique poreuse ayant des cristaux en forme d'aiguille qui sont déposés à la surface de ladite structure du réseau.

9. Procédé selon la revendication 8, où la cuisson pour la formation des cristaux en forme d'aiguille est entreprise à une température maximale de 1000-1400°C et le refroidissement subséquent est entrepris à raison de 30-70° C/h.

10. Procédé selon la revendication 8 ou 9, où la bouillie est une bouillie d'une fritte vitrifiée.
